# EUROPEAN PATENT SPECIFICATION

(11) **EP 4 283 158 B1**
(45) Date of publication and mention of the grant of the patent: **11.12.2024**
(21) Application number: 21920889.9
(22) Date of filing: 31.12.2021
(51) Int. Cl.: F16F 9/06, F16F 9/48, F16F 9/516, F16F 9/346

(54) **DAMPING ADAPTIVE AUTOMOTIVE SHOCK ABSORBER**
DÄMPFENDER ADAPTIVER KRAFTFAHRZEUGSTOSSDÄMPFER
AMORTISSEUR DE CHOCS AUTOMOBILE À AMORTISSEMENT ADAPTATIF

(30) Priority: 22.01.2021 CN 202110087226
(43) Date of publication of application: 29.11.2023
(73) Proprietor: Baoding Dongli Machinery Co., Ltd, Baoding, Hebei 071000 (CN)
(72) Inventor: WANG, Zheng, Baoding, Hebei 071000 (CN); WANG, Dongbo, Baoding, Hebei 071000 (CN); LI, Hui, Baoding, Hebei 071000 (CN); TIAN, Zhengli, Baoding, Hebei 071000 (CN); GU, Shaonan, Baoding, Hebei 071000 (CN); GU, Guang, Baoding, Hebei 071000 (CN); ZHANG, Wensheng, Baoding, Hebei 071000 (CN); YU, Mingkai, Baoding, Hebei 071000 (CN); ZHANG, Xun, Baoding, Hebei 071000 (CN)
(74) Representative: Wittop Koning, Tom Hugo
(86) International application number: PCT/CN2021/143926
(87) International publication number: WO 2022/156518

(56) References cited:
- EP-A2- 2 374 638
- CN-A- 108 571 555
- CN-A- 108 757 814
- CN-A- 109 854 664
- CN-A- 109 854 664
- CN-A- 112 727 978
- JP-A- 2009 014 019
- US-A- 3 779 135

## Description

### TECHNICAL FIELD

The present disclosure relates to the field of shock absorber for automobile, in particular to an adaptive damping shock absorber for automobile.

### BACKGROUND ART

Along with the improvement of living standard of people, the driving of the off-road vehicle is pursued by comfort in the driving process on a paved road, and by stability and passing capacity in the driving process on a non-paved road. The vehicle runs on the road, along with the change of potholes on the road surface, wheels are subjected to expansion and contraction change under the support of suspension, relative axial position change is also generated on a piston rod of a shock absorber, the larger the relative position change is, the more serious the bumps of the vehicle is. In order to make drivers and passengers more comfortable, the higher damping is required, and further, the change of the damping value is expected to be synchronous with the change of potholes on the road surface. However, the damping value of the existing shock absorber is fixed, the whole damping strength of the shock absorber is adjusted by manually predicting the road condition, and a driver is needed to get off to rotate an adjusting knob, which is very inconvenient, the shock absorber can only have a relatively fixed damping value even if an electric control motor is adopted for adjustment, and the change of the road condition and the damping value cannot be kept synchronous at any time.

Document CN109854664, considered as the closest prior art, discloses a shock absorber with variable damping comprising a pin sliding in a hollow piston rod.

### SUMMARY

The present disclosure aims to provide an adaptive damping shock absorber for automobile, which increases or decreases damping according to a variable, realizes adaptive adjustment of damping of an automobile under any road condition, and enables the change of the damping value to be synchronous with the change of the road condition, so that the automobile runs more smoothly and comfortably.

In order to achieve the purpose, the present disclosure provides an adaptive damping shock absorber for automobile, comprising a cylinder barrel, a piston rod, a damping valve and a nitrogen tank, the adaptive damping shock absorber for automobile further comprises a flute-like assembly arranged in the cylinder barrel, the flute-like assembly comprises a core tube seat, an inner tube and an outer tube, wherein each of two ends of the outer tube are provided with at least one row of damping through-holes, , one of the two ends of the outer tube is provided with a first check valve and is inserted into the piston rod, another of the two ends of the outer tube is arranged on the core tube seat and is connected with the nitrogen tank via a first oil tube pipeline, the core tube seat is communicated with the first oil tube pipeline via a second check valve, the inner tube is arranged in the outer tube, a bottom end of the inner tube is fixed on the core tube seat and is connected with the nitrogen tank via a second oil tube pipeline, the core tube seat is fixed to a bottom of the cylinder barrel, the damping valve is fixed to one end of the piston rod and is arranged in the cylinder barrel, one end of the piston rod has a sealing pipe fixed thereto, and another end of the piston rod passes through an end cover of the cylinder barrel and is provided with a lower lug, and an upper lug is fixed to the bottom of the cylinder barrel.

Preferably, the damping through-holes are linearly arranged at equal intervals and have a same diameter.

Preferably, the damping through-holes are linearly arranged at equal intervals and have different diameters that gradually increase from outside to inside.

Preferably, the damping through-holes are linearly arranged with distances between each two adjacent damping through-holes gradually increased from outside to inside, and the damping through-holes have a same diameter.

Preferably, the damping through-holes have a same diameter, and the damping through-holes are spirally arranged at equal intervals.

Preferably, a top end of the inner pipe is provided with a flared opening, an outer diameter of the flared opening is equal to an inner diameter of the outer pipe, and a length of the inner pipe is between 2/3 and 1/3 of a length of the outer pipe.

Preferably, a length of the sealing pipe is 1/3 of the length of the outer pipe, and the sealing pipe is fixed inside the piston rod.

Preferably, the damping valve comprises a damping valve body, a compression damping mechanism, a tensile damping mechanism and a lock nut, the compression damping mechanism and the tensile damping mechanism are fixed on either side of the damping valve body respectively, the compression damping mechanism comprises a compression valve plate set and a compression stopper, the tensile damping mechanism comprises a tensile valve plate set and a tensile stopper, and a guidance tape is fixed on an outside of the damping valve body.

Therefore, the adaptive damping shock absorber for automobile adopting the structure above described increases or decreases the damping according to the position variable, realizes the adaptive adjustment of the damping of the automobile under any road condition, and ensures that the change of the damping value is synchronous with the change of the road condition, so that the automobile runs more smoothly and comfortably.

The technical solution of the present disclosure is further described in detail by the accompanying drawings and embodiments.

### BRIEF DESCRIPTION OF THE DRAWINGS

FIG. 1 is a schematic structural diagram of an adaptive damping shock absorber for automobile according to the present disclosure.
FIG. 2 is a schematic structural diagram of a flute-like assembly according to the present disclosure.
FIG. 3 is a schematic partial structural diagram of an existing shock absorber.
FIG. 4 is a diagram of an oil circuit during being compressed according to the present disclosure.
FIG. 5 is a diagram of an oil circuit of during being tensioned according to the present disclosure.
FIG. 6 is a schematic structural diagram of an outer tube in embodiment 2 of the present disclosure.
FIG. 7 is a schematic structural diagram of an outer tube in embodiment 3 of the present disclosure.
FIG. 8 is a schematic structural diagram of an outer tube in embodiment 4 of the present disclosure.

Reference numerals: 1. piston rod; 11. lower lug; 2. cylinder barrel; 21. end cover; 22. anti-collision damping ring; 23. upper lug; 3. damping valve; 31. damping valve body; 32. guidance tape; 33. compression valve plate set; 34. compression stopper; 35. tensile valve plate set; 36. tensile stopper; 37. lock nut; 4. sealing pipe; 5. core tube seat; 51. second check valve; 6. outer tube; 61. damping through-hole; 62. first check valve; 7. inner tube; 71. flared opening; 8. nitrogen tank; 81. first oil tube pipeline; 82. second oil tube pipeline.

### DETAILED DESCRIPTION OF THE EMBODIMENTS

### Embodiment 1

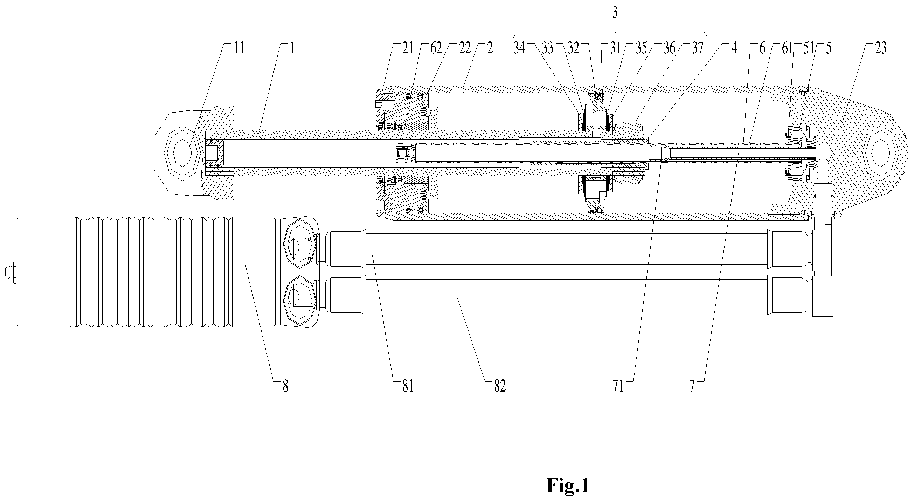

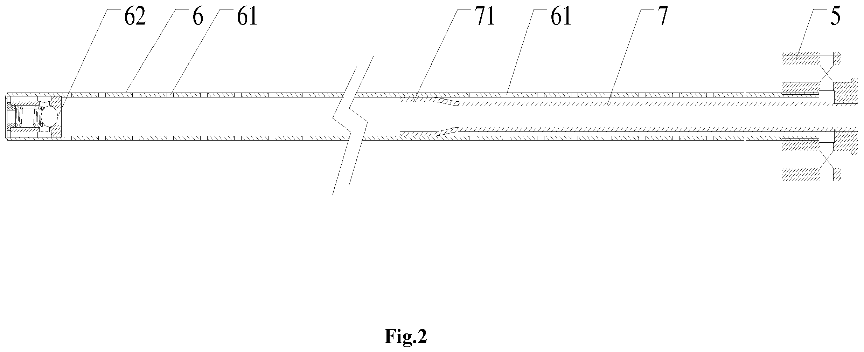

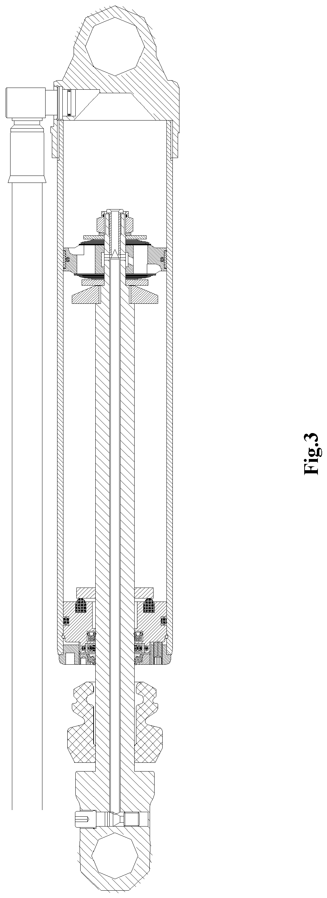

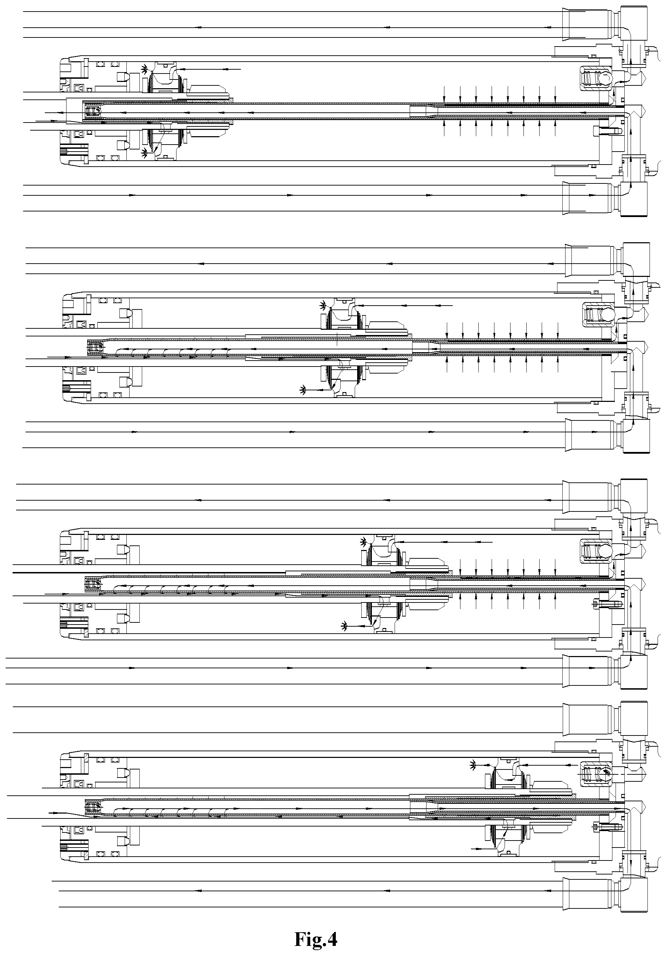

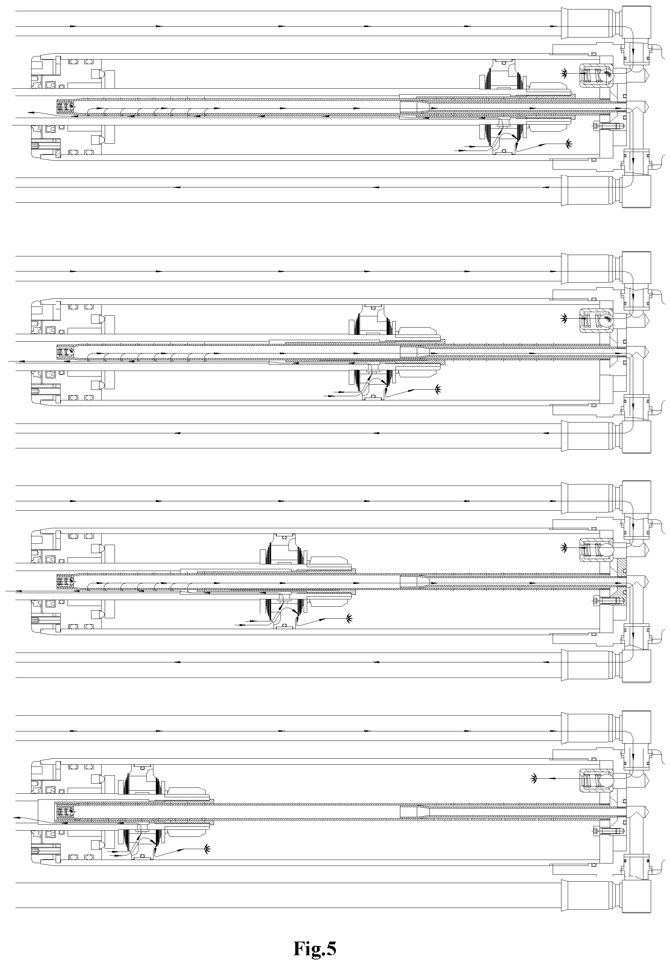

Fig. 1 is a schematic structural diagram of an adaptive damping shock absorber for automobile, Fig. 2 is a schematic structural diagram of a flute-like assembly according to the present disclosure, Fig. 3 is a schematic partial structural diagram of an existing shock absorber, Fig. 4 is a diagram of an oil circuit during being compressed according to the present disclosure, and Fig. 5 is a diagram of an oil circuit during being tensioned according to the present disclosure. As shown in the drawings, the adaptive damping shock absorber for automobile includes a cylinder barrel 2, a piston rod 1, a damping valve 3 and a nitrogen tank 8, and further includes a flute-like assembly arranged in the cylinder barrel 2, the flute-like assembly includes a core pipe seat 5, an inner pipe 7 and an outer pipe 6, each of two ends of the outer pipe 6 are provided with at least one row of damping through-holes 61, and in the present Embodiment 1,the damping through-holes 61 are linearly arranged at equal intervals and have a same diameter. One of the two ends of the outer tube 6 is provided with a first check valve 62 and is inserted into the piston rod 1 so that oil can flow out from the inside of the outer tube 6 and cannot flow into the outer tube 6 from the outside to the inside. The other end of the two ends of the outer tube 6 is arranged on the core tube seat 5 and is connected with the nitrogen tank 8 via a first oil tube pipeline 81, the core tube seat 5 is communicated with the first oil tube pipeline 81 via a second check valve 51, the inner tube 7 is arranged in the outer tube 6, the top end of the inner tube 7 is provided with a flared opening 71, the length of the inner tube 7 is between 2/3 and 1/3 of the length of the outer tube 6, the outer diameter of the flared opening 71 is equal to the inner diameter of the outer tube 6, so that a first cavity is formed between one end, close to the core tube seat 5, of the outer tube 6 and the inner tube 7. The bottom end of the inner pipe 7 is fixed on the core tube seat 5 and is connected with the nitrogen tank 8 via a second oil tube pipeline 82, and the core tube seat 5 is fixed to the bottom of the cylinder barrel 2. The damping valve 3 is fixed to one end of the piston rod 1 and is arranged in the cylinder barrel 2, one end of the piston rod 1 has a sealing pipe 4 fixed thereto, the length of the sealing pipe 4 is 1/3 of the length of the outer tube, and the sealing pipe 4 is fixed inside the piston rod 1. The sealing pipe 4 is used for blocking the damping through-holes 61 on the outer tube 6 along with the movement of the piston rod 1, and the damping valve 3 includes a damping valve body 31, a compression damping mechanism, a tensile damping mechanism and a lock nut 37, the compression damping mechanism and the tensile damping mechanism are fixed on either side of damping valve body 31 respectively, and the compression damping mechanism includes a compression valve plate set 33 and a compression stopper 34, and the tensile damping mechanism includes a tensile valve plate set 35 and a tensile stopper 36, and a guidance tape is fixed on the outside of the damping valve body 31. During being compressed or tensioned, the compression valve plate set or the tensile valve plate set is deformed, so that the oil can pass through the damping valve body. The other end of the piston rod 1 passes through an end cover of the cylinder barrel 2 and is provided with a lower lug 11, and an upper lug 23 is fixed to the bottom of the cylinder barrel 2.

The compression process is as follows:
When the piston rod 1 moves inwards, the sealing pipe 4 blocks the damping through-holes 61 at the left end of the outer pipe 6, the compression valve plate set is deformed, so that hydraulic oil flows from the right side to the left side of the damping valve, meanwhile, the hydraulic oil enters the first cavity through the damping through-holes at the right end and then enters the nitrogen tank via the first oil tube pipeline 81, the hydraulic oil in the nitrogen tank enters the inner tube 7 via the second oil tube pipeline 82, enters the piston rod 1 via the first check valve, flows through the damping valve and flows into the cylinder barrel 2 at the left side of the damping valve; along with the increase of the deformation, the sealing pipe 4 is far away from the damping through-holes on the left side, so that the hydraulic oil flows through the damping valve through the damping through-holes on the left side and enters the cylinder barrel 2 at the left side of the damping valve; when the sealing pipe 4 blocks the damping through-holes on the right side, along with the number of the damping through-holes on the right side reduces, the damping gradually increases. The damping is adaptively adjusted along with the change of the deformation.

The tensioning process is as follows:
When the piston rod 1 extends, the hydraulic oil in the nitrogen tank rapidly enters the right side of the damping valve 3 via the second check valve 51, the tensile valve plate set is deformed at the same time, the left-side hydraulic oil enters the right side from the left side via the damping valve, so that the shock absorber reacts rapidly, and when an automobile is suspended, the shock absorber rapidly returns to the initial position. Along with the movement of the sealing pipe 4, the damping through-hole on the left side is gradually covered and blocked, and the damping is gradually increased. The damping is adaptively adjusted along with the change of the deformation.

### Embodiment 2

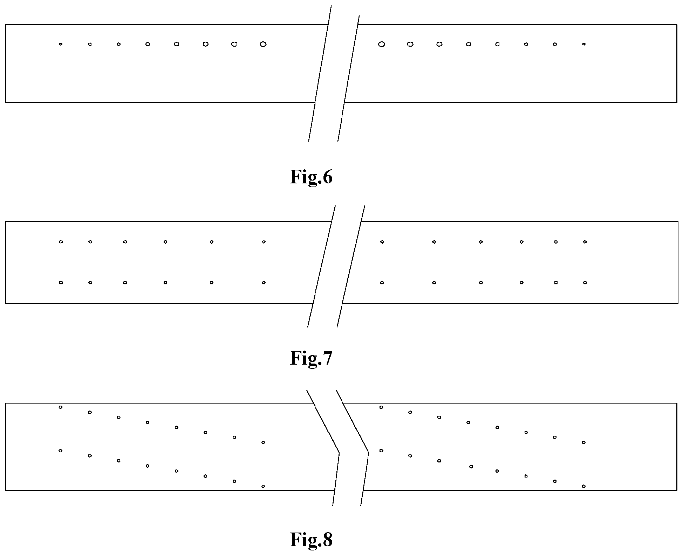

The difference between the Embodiment 2 and Embodiment 1 is that the damping through-holes are linearly arranged at equal intervals and have different diameters that gradually increase from outside to inside, as shown in Fig. 6.

### Embodiment 3

The difference between the Embodiment 3 and Embodiment 1 in that the damping through-holes are linearly arranged with distances between each two adjacent damping through-holes gradually increased from outside to inside, and the damping through-holes have a same diameter, as shown in Fig. 7.

### Embodiment 4

The difference between the Embodiment 4 and Embodiment 1 is that the damping through-holes have a same diameter, and the damping through-holes are arranged spirally at equal intervals, as shown in Fig. 8.

Therefore, the adaptive damping shock absorber for automobile adopting the structure described above increases or reduces the damping according to the variable, realizes the adaptive adjustment of the damping of the automobile under any road condition, and ensures that the automobile runs more smoothly and comfortably.

Finally, it should be noted that: the above embodiments are only intended to illustrate the technical solution of the present disclosure and not to limit the same, and although the present disclosure is described in detail with reference to the preferred embodiments, those of ordinary skill in the art should understand that: modifications and equivalents may be made to the disclosed embodiments. The scope of protection is defined by the appended claims.

## Claims

1. An adaptive damping shock absorber for automobile, comprising a cylinder barrel (2), a piston rod (1), a damping valve (3) and a nitrogen tank (8), **characterized in that**:
the adaptive damping shock absorber for automobile further comprises a flute-like assembly arranged in the cylinder barrel, the flute-like assembly comprises a core tube seat (5), an inner tube (7) and an outer tube (6), wherein each of two ends of the outer tube are provided with at least one row of damping holes (61),
one of the two ends of the outer tube is provided with a first check valve (62) and is inserted into the piston rod, another of the two ends of the outer tube is arranged on the core tube seat (5) and is connected with the nitrogen tank via a first oil tube pipeline (81),
the core tube seat is communicated with the first oil tube pipeline via a second check valve (62),
the inner tube is arranged in the outer tube, a bottom end of the inner tube is fixed on the core tube seat and is connected with the nitrogen tank via a second oil tube pipeline (82),
the core tube seat is fixed to a bottom of the cylinder barrel, the damping valve is fixed to one end of the piston rod and is arranged in the cylinder barrel, one end of the piston rod has a sealing pipe (4) fixed thereto, and another end of the piston rod passes through an end cover of the cylinder barrel and is provided with a lower lug (11), and an upper lug (23) is fixed to the bottom of the cylinder barrel.

2. The adaptive damping shock absorber for automobile according to claim 1, **characterized in that**: the damping through-holes are linearly arranged at equal intervals and have a same diameter.

3. The adaptive damping shock absorber for automobile according to claim 1, **characterized in that**: the damping through-holes are linearly arranged at equal intervals, and have different diameters that gradually increase from outside to inside.

4. The adaptive damping shock absorber for automobile according to claim 1, **characterized in that**: the damping through-holes are linearly arranged with distances between each two adjacent damping through-holes gradually increased from outside to inside, and the damping through-holes have a same diameter.

5. The adaptive damping shock absorber for automobile according to claim 1, **characterized in that**: the damping through-holes have a same diameter, and the damping through-holes are spirally arranged at equal intervals.

6. The adaptive damping shock absorber for automobile according to claim 1, **characterized in that**: a top end of the inner pipe is provided with a flared opening, an outer diameter of the flared opening is equal to an inner diameter of the outer pipe, and a length of the inner pipe is between 2/3 and 1/3 of a length of the outer pipe.

7. The adaptive damping shock absorber for automobile according to claim 6, **characterized in that**: a length of the sealing pipe is 1/3 of the length of the outer pipe, and the sealing pipe is fixed inside the piston rod.

8. The adaptive damping shock absorber for automobile according to claim 1, **characterized in that**: the damping valve comprises a damping valve body, a compression damping mechanism, a tensile damping mechanism and a lock nut, the compression damping mechanism and the tensile damping mechanism are fixed on either side of the damping valve body respectively, the compression damping mechanism comprises a compression valve plate set and a compression stopper, the tensile damping mechanism comprises a tensile valve plate set and a tensile stopper, and a guidance tape is fixed on an outside of the damping valve body.

## Patentansprüche

1. Adaptiver Dämpfungsstoßdämpfer für Automobile, der ein Zylinderrohr (2), eine Kolbenstange (1), ein Dämpfungsventil (3) und einen Stickstofftank (8) umfasst, **dadurch gekennzeichnet, dass** der adaptive Dämpfungsstoßdämpfer für Automobile ferner eine in dem Zylinderrohr angeordnete flötenformige Anordnung umfasst, wobei die flötenformige Anordnung einen Kernrohrsitz (5), ein Innenrohr (7) und ein Außenrohr (6) umfasst, wobei jedes der beiden Enden des Außenrohrs mit mindestens einer Reihe von durchgehenden Dämpfungsöffnungen (61) versehen ist, eines der beiden Enden des Außenrohrs mit einem ersten Rückschlagventil (62) versehen ist und in die Kolbenstange eingesetzt ist, ein anderes der beiden Enden des Außenrohrs auf dem Kernrohrsitz (5) angeordnet ist und über eine erste Ölrohrleitung (81) mit dem Stickstofftank verbunden ist, der Kernrohrsitz über ein zweites Rückschlagventil (62) mit der ersten Ölrohrleitung in Verbindung steht, das Innenrohr in dem Außenrohr angeordnet ist, ein unteres Ende des Innenrohrs an dem Kernrohrsitz befestigt und mit dem Stickstofftank über eine zweite Ölrohrleitung (82) verbunden ist, der Kernrohrsitz an einem Boden des Zylinderrohrs befestigt ist, das Dämpfungsventil an einem Ende der Kolbenstange befestigt und in dem Zylinderrohr angeordnet ist, an einem Ende der Kolbenstange ein Dichtungsrohr (4) befestigt ist, und ein anderes Ende der Kolbenstange durch einen Enddeckel des Zylinderrohrs führt und mit einer unteren Öse (11) versehen ist, und eine obere Öse (23) am Boden des Zylinderrohrs befestigt ist.

2. Adaptiver Dämpfungsstoßdämpfer für Automobile nach Anspruch 1, **dadurch gekennzeichnet, dass** die durchgehenden Dämpfungsöffnungen linear in gleichen Abständen angeordnet sind und einen gleichen Durchmesser haben.

3. Adaptiver Dämpfungsstoßdämpfer für Automobile nach Anspruch 1, **dadurch gekennzeichnet, dass** die durchgehenden Dämpfungsöffnungen linear in gleichen Abständen angeordnet sind und unterschiedliche Durchmesser haben, die von außen nach innen allmählich zunehmen.

4. Adaptiver Dämpfungsstoßdämpfer für Automobile nach Anspruch 1, **dadurch gekennzeichnet, dass** die durchgehenden Dämpfungsöffnungen linear angeordnet sind, wobei die Abstände zwischen jeweils zwei benachbarten durchgehenden Dämpfungsöffnungen von außen nach innen allmählich zunehmen, und die durchgehenden Dämpfungsöffnungen den gleichen Durchmesser haben.

5. Adaptiver Dämpfungsstoßdämpfer für Automobile nach Anspruch 1, **dadurch gekennzeichnet, dass** die durchgehenden Dämpfungsöffnungen den gleichen Durchmesser haben und die durchgehenden Dämpfungsöffnungen spiralförmig in gleichen Abständen angeordnet sind.

6. Adaptiver Dämpfungsstoßdämpfer für Automobile nach Anspruch 1, **dadurch gekennzeichnet, dass** ein oberes Ende des Innenrohrs mit einer aufgeweiteten Öffnung versehen ist, ein Außendurchmesser der aufgeweiteten Öffnung gleich einem Innendurchmesser des Außenrohrs ist, und eine Länge des Innenrohrs zwischen 2/3 und 1/3 einer Länge des Außenrohrs beträgt.

7. Adaptiver Dämpfungsstoßdämpfer für Automobile nach Anspruch 6, **dadurch gekennzeichnet, dass** eine Länge des Dichtungsrohrs 1/3 der Länge des Außenrohrs beträgt und das Dichtungsrohr im Inneren der Kolbenstange befestigt ist.

8. Adaptiver Dämpfungsstoßdämpfer für Automobile nach Anspruch 1, **dadurch gekennzeichnet, dass** das Dämpfungsventil einen Dämpfungsventilkörper, einen Kompressionsdämpfungsmechanismus, einen Zugdämpfungsmechanismus und eine Sicherungsmutter umfasst, der Kompressionsdämpfungsmechanismus und der Zugdämpfungsmechanismus jeweils auf beiden Seiten des Dämpfungsventilkörpers befestigt sind, der Kompressionsdämpfungsmechanismus einen Satz von Kompressionsventilplatten und einen Kompressionsstopper umfasst, der Zugdämpfungsmechanismus einen Satz von Zugventilplatten und einen Zugstopper umfasst, und ein Führungsband an einer Außenseite des Dämpfungsventilkörpers befestigt ist.

## Revendications

1. Amortisseur adaptatif pour automobile, comprenant un cylindre (2), une tige de piston (1), une soupape d'amortissement (3) et un réservoir d'azote (8), **caractérisé en ce que** l'amortisseur adaptatif pour automobile comprend en outre un assemblage en forme de flûte disposé dans le cylindre, l'assemblage en forme de flûte comprenant un siège de tube central (5), un tube intérieur (7) et un tube extérieur (6) dans lequel chacune des deux extrémités du tube extérieur est pourvue d'au moins une rangée de trous de passage d'amortissement (61), l'une des deux extrémités du tube extérieur est pourvue d'un premier clapet anti-retour (62) et est insérée dans la tige du piston, une autre des deux extrémités du tube extérieur est disposée sur le siège du tube central et est reliée au réservoir d'azote par l'intermédiaire d'une première canalisation d'huile (81),
le siège du tube central est relié au premier tube d'huile par un second clapet de non-retour (62), le tube intérieur est placé dans le tube extérieur, une extrémité inférieure du tube intérieur est fixée sur le siège du tube central et est reliée au réservoir d'azote par un second tube d'huile (82), le siège du tube central est fixé au fond du corps du cylindre, la soupape d'amortissement est fixée à une extrémité de la tige de piston et disposée dans le cylindre, une extrémité de la tige de piston est munie d'un tuyau d'étanchéité (4), et une autre extrémité de la tige de piston traverse un couvercle d'extrémité du cylindre et est munie d'une patte inférieure (11), et une patte supérieure (23) est fixée au fond du cylindre.

2. L'amortisseur adaptatif pour automobile selon la revendication 1, **caractérisé en ce que** : les trous de passage d'amortissement sont disposés linéairement à intervalles égaux et ont le même diamètre.

3. L'amortisseur adaptatif pour automobile selon la revendication 1, **caractérisé en ce que** les trous de passage d'amortissement sont disposés linéairement à intervalles égaux et ont des diamètres différents qui augmentent graduellement de l'extérieur vers l'intérieur.

4. Amortisseur adaptatif pour automobile selon la revendication 1, **caractérisé en ce que** les trous de passage d'amortissement sont disposés linéairement avec des distances entre chaque deux trous de passage d'amortissement adjacents augmentant graduellement de l'extérieur vers l'intérieur, et les trous de passage d'amortissement ont un même diamètre.

5. L'amortisseur adaptatif pour automobile selon la revendication 1, **caractérisé en ce que** les trous de passage d'amortissement ont un même diamètre, et les trous de passage d'amortissement sont disposés en spirale à intervalles égaux.

6. Amortisseur adaptatif pour automobile selon la revendication 1, **caractérisé en ce qu'**une extrémité supérieure du tube intérieur est pourvue d'une ouverture évasée, un diamètre extérieur de l'ouverture évasée est égal à un diamètre intérieur du tube extérieur, et une longueur du tube intérieur est comprise entre 2/3 et 1/3 d'une longueur du tube extérieur.

7. L'amortisseur adaptatif pour automobile selon la revendication 6, **caractérisé en ce que** : une longueur du tuyau d'étanchéité est 1/3 de la longueur du tuyau extérieur, et le tuyau d'étanchéité est fixé à l'intérieur de la tige de piston.

8. L'amortisseur adaptatif pour automobile selon la revendication 1, **caractérisé en ce que** la soupape d'amortissement comprend un corps de soupape d'amortissement, un mécanisme d'amortissement de compression, un mécanisme d'amortissement de traction et un écrou de blocage, le mécanisme d'amortissement de compression et le mécanisme d'amortissement de traction sont fixés respectivement de chaque côté du corps de soupape d'amortissement, le mécanisme d'amortissement de compression comprend un ensemble de plaque de soupape de compression et un bouchon de compression, le mécanisme d'amortissement de traction comprend un ensemble de plaque de soupape de traction et un bouchon de traction, et une bande de guidage est fixée sur un côté extérieur du corps de soupape d'amortissement.
